(19) Europäisches Patentamt
European Patent Office
Office européen des brevets

(11) **EP 3 361 050 B1**

(12) **EUROPEAN PATENT SPECIFICATION**

(45) Date of publication and mention
of the grant of the patent:
**25.11.2020  Bulletin 2020/48**

(51) Int Cl.:
***F01D 5/14*** *(2006.01)*

(21) Application number: **18151669.1**

(22) Date of filing: **15.01.2018**

(54) **GAS TURBINE ENGINE FAN BLADE WITH AXIAL LEAN**

GASTURBINENMOTOR-GEBLÄSESCHAUFEL MIT AXIALER NEIGUNG

AUBE DE VENTILATEUR DE TURBINE À GAZ À INCLINAISON AXIALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.02.2017  GB 201702380**

(43) Date of publication of application:
**15.08.2018  Bulletin 2018/33**

(73) Proprietor: **Rolls-Royce plc
London N1 9FX (GB)**

(72) Inventors:
• **Barale, Marco
Derby, Derbyshire DE24 8BJ (GB)**
• **Gonzalez-Gutierrez, Gabriel
Derby, Derbyshire DE24 8BJ (GB)**
• **Wilson, Mark
Derby, Derbyshire DE24 8BJ (GB)**
• **Phelps, Benedict
Derby, Derbyshire DE24 8BJ (GB)**
• **Johal, Kashmir
Derby, Derbyshire DE24 8BJ (GB)**
• **Smith, Nigel
Derby, Derbyshire DE24 8BJ (GB)**

(74) Representative: **Rolls-Royce plc
Intellectual Property Dept SinA-48
PO Box 31
Derby DE24 8BJ (GB)**

(56) References cited:
EP-A1- 2 080 909       EP-A1- 3 056 664
WO-A1-2014/188121    US-A- 5 167 489
US-A1- 2013 219 922

**Description**

This disclosure relates to a fan blade for a gas turbine engine, a fan stage comprising at least one such fan blade, and a gas turbine engine comprising such a fan stage.

Modern gas turbine aero-engines typically comprise a fan, which compresses the incoming air and directs at least a portion of that air along a bypass duct, with the remainder of the air flowing through the engine core.

US 5,167,489 relates to a rotor blade that includes a root, tip, leading edge, trailing edge, forward surface, and aft surface, and a pitch section disposed equidistantly between the root and tip. The blade has a forward sweep from at least the pitch section to the blade tip relative to the incoming streamsurfaces of a fluid flowable over the blade.

The fan blades of modern gas turbine engines may be susceptible to a known phenomenon called flutter. Flutter may occur at certain engine operating conditions, for example certain rotational speeds and/or thrusts and/or combinations thereof.

Flutter may be characterized as a self-excited vibration. When the aerofoils in a blade row (such as the fan blades in a gas turbine engine fan) vibrate, they generate unsteady aerodynamic forces on the blade row itself. Under most conditions, these unsteady aerodynamic forces cause the blade row to do work on the surrounding air, and the vibrations decay in amplitude. However, at certain operational conditions, the surrounding air can do work on the fan itself. If the work done by the air exceeds the work dissipated by mechanical damping, then the vibrations will grow. This instability is known as flutter.

Modern large gas turbine engines are being designed to have lower specific thrust and higher fan tip loading than their predecessors. This may be achieved by driving the fan via a gearbox in order to reduce the rotational speed of the fan. Lower specific thrust and/or lower rotational speed and/or higher tip loading may be beneficial from an efficiency perspective, but may present significant operability challenges.

For example, as the cruise and sea level working lines separate at lower pressure ratios, the challenge to have sufficient stall and flutter margins relative to the sea level static (SLS) working line, and acceptable cruise working line efficiency becomes more difficult.

Accordingly, the design of modern turbofan gas turbine engines tends to increase the susceptibility of fan blades to experience flutter. Flutter is undesirable because it can generate large stresses in an engine.

Accordingly, it would be desirable to be able to reduce the susceptibility of the fan blades in an engine to flutter.

According to an aspect, there is provided a fan stage for a gas turbine engine according to claim 1.

The blades for such a fan stage may be described as having forward axial lean.

Where reference is made to the axial, radial and circumferential directions, the skilled person will readily understand this to mean the conventional directions when the fan blade is assembled as part of a fan stage or is provided in a gas turbine engine. Viewing the blade along a circumferential direction may mean viewing the blade in side profile and/or in the meridional plane and/or projected onto a plane defined by the axial and radial directions.

As explained in greater detail elsewhere herein, the present inventors have understood that a fan blade as described and/or claimed herein may have reduced susceptibility to flutter compared with conventional blades, for example because the first (or lowest) natural frequency mode of the fan blade may have a reduced torsional content compared to conventional blades. The present inventors have understood, inter alia, the way in which this torsional content of the first natural frequency mode may have an impact on the susceptibility of a fan blade to flutter, and have developed the blades described and/or claimed herein in order to reduce this susceptibility.

The angle formed between the radial direction and a straight line drawn between the leading edge at the root and at the tip may be in the range of from -5° and -0.25°, for example -4° and -0.5°, for example -3° and -0.75°, for example -2° and -1°.

The angle formed between the radial direction and a line drawn between any two points on the leading edge that have a difference in radius of at least 5% of the blade span may be in the range of from -5° and -0.25°, for example -4° and -0.5°, for example -3° and -0.75°, for example -2° and -1°.

The maximum perpendicular distance between any point on the leading edge and a straight line drawn between the leading edge at the root and at the tip is 5% of blade span, for example 4%, 3%, 2%, 1%, 0.5% or 0.1% of the blade span.

The fan blade may comprise a platform. The fan blade may comprise a root portion. The root portion may extend between the platform and the root of the aerofoil portion. Alternatively, the aerofoil portion may extend directly from the platform, with no intermediate root portion, such that the root of the aerofoil foil portion is the root of the fan blade.

Where the fan blade comprises a root portion, the radial extent of the root portion may be no more than 15%, for example no more than 10%, 7%, 5%, 3%, 2% or 1%, of the span of the aerofoil portion, for example.

The fan blade may comprise a tip portion that extends at least radially away from the tip of the aerofoil portion. Alternatively, the fan blade may comprise no tip portion, such that the tip of the aerofoil portion is also the tip of the fan blade.

Where the fan blade comprises a tip portion, the radial extent of the tip portion may be no more than 15%, for example no more than 10%, 7%, 5%, 3%, 2% or 1%, of the span of the aerofoil portion, for example.

For any two points on the leading edge of a fan blade as described and/or claimed herein that are radially closer to the tip than to the root and have a difference in radius of at least 1%, for example at least 2%, for example at least 3%, for example at least 4%, for example at least 5% of the blade span, the axial position of the radially outer point may be forward of the axial position of the radially inner point.

A stacking axis of the aerofoil portion may be defined by a line joining the centroids of all of the aerofoil segments that are stacked to form the aerofoil portion. When viewed along a circumferential direction, the stacking axis may have a forward lean. For example, the angle formed between the radial direction and a straight line drawn between the stacking axis at the root and at the tip may be in the range of from -40°and 0°, for example -30°and -1°, for example -25°and -2°, for example -20°and -3°, for example -15°and -5°, for example -10° and -6°, where a negative angle indicates that the respective line has an axial component that is in the same direction as the axial component of the direction from a trailing edge to the leading edge of the blade. By way of further example, optionally the stacking axis may have a forward (negative) lean in the radially outer half of the aerofoil portion, for example only in the radially outer half of the aerofoil portion.

The aerofoil portion may have a trailing edge extending from a root to a tip. When viewed along a circumferential direction, the trailing edge may have a forward lean. For example, the angle formed between the radial direction and a straight line drawn between the trailing edge at the root and at the tip may be in the range of from -40°and 0°, for example -30°and - 1°, for example -25°and -2.5°, for example -20°and -5°, for example -15°and -7.5°, for example around -10°, where a negative angle indicates that the respective line has an axial component that is in the same direction as the axial component of the direction from a trailing edge to the leading edge of the blade.

The trailing edge may be shaped such that the forward (negative) lean angle over a radially outer half of the trailing edge is greater, for example significantly greater, than the forward (negative) lean angle over a radially inner half of the trailing edge. For example, the forward (negative) lean angle over a radially outer half of the trailing may be at least 1.5 times, for example at least twice, for example at least 3, 4, 5, 6, 7, 8, 9 or 10 times the forward (negative) lean angle over a radially inner half of the trailing edge. In some arrangements, the trailing edge may be radial (including substantially radial) over a radially inner portion of the blade (or aerofoil portion), for example over a radially inner 10%, 20%, 30%, 40% or around 50%.

In any aspect or example of the present disclosure, the magnitude of the angle formed between the radial direction and a straight line drawn between the trailing edge at the root and at the tip may be greater than the magnitude of the angle formed between the radial direction and a straight line drawn between the leading edge at the root and at the tip. For example, the angle formed between the radial direction and a straight line drawn between the trailing edge at the root and at the tip may have a higher negative value than that of the of the angle formed between the radial direction and a straight line drawn between the leading edge at the root and at the tip. The angle formed between the radial direction and a straight line drawn between the trailing edge at the root and at the tip may be negative. The angle formed between the radial direction and a straight line drawn between the leading edge at the root and at the tip may be negative.

Any fan blade and/or aerofoil portion described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre, and/or from a metal, such as a titanium based metal or an aluminium based material (such as an Aluminium-Lithium alloy) or a steel based material.

According to an aspect, there is provided a fan stage for a gas turbine engine comprising a plurality of fan blades as described and/or claimed herein. The fan stage may comprise a hub, from which the fan blades may extend, for example in a radial direction.

Such a hub may be, or may comprise, a fan disc and/or may be driven by a shaft. The shaft itself may be driven by a turbine of a gas turbine engine.

The fan blades may be attached to the hub in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc.

By way of further example, the fan blades maybe formed integrally with a hub. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

By way of further example, the fan blades may be attached to a hub in a manner that allows their pitch to be varied.

In any arrangement of fan stage, the ratio of the radius of the position where the leading edge of one of the fan blades meets the hub to the outermost radial extent of the leading edge of the fan blade is less than 0.4, for example less than 0.37, for example less than 0.35, for example less than 0.33, for example less than 0.3, for example less than 0.25. This may be referred to as the hub-to-tip ratio and/or may be the same as the ratio of the radius of the root at the leading edge of the aerofoil portion to the radius of the tip at the leading edge of the aerofoil portion, for example where the fan blade is not provided with a root portion or a tip portion. The hub-to-tip ratio refers, of course, to the gas-washed portion of the fan blade, i.e. the portion radially outside any platform.

According to an aspect, there is provided a gas turbine engine comprising at least one fan blade as described and/or claimed herein and/or a fan stage as described and/or claimed herein.

Such a gas turbine engine (which may, of course, be a turbofan gas turbine engine) may have a specific thrust of less than 15 lbf/lb/s (or approximately 150 N/Kg/s), for example less than 12 lbf/lb/s (or approximately 120 N/Kg/s), for example less than 10 lbf/lb/s (or approximately 110 N/Kg/s or 100 N/Kg/s), for example less than 9 lbf/lb/s (or approximately 90 N/Kg/s), for example less than 8.5 lbf/lb/s (or approximately 85 N/Kg/s), for example less than 8 lbf/lb/s (or approximately 80 N/Kg/s).

Any gas turbine engine described and/or claimed herein may have a fan tip loading ($dH/U_{tip}^2$) at cruise conditions of greater than 0.3, for example in the range of from 0.3 to 0.37, for example 0.32 to 0.36, for example on the order of 0.35 (all units being $JKg^{-1}K^{-1}/(ms^{-1})^2$), where dH is the enthalpy rise across the fan (for example the 1-D average enthalpy rise of the flow across the fan at cruise conditions), and $U_{tip}$ is the velocity of the tip, for example at cruise conditions, which may be calculated as the rotational speed multiplied by the tip radius at the leading edge. Cruise may be defined as the phase between the initial ascent and final descent of an aircraft to which the engine may be attached. As used herein, cruise may mean, for example, mid-cruise, i.e. mid-point (for example in terms of time and/or fuel burn) of a flight (or at least of the cruise phase of a flight).

The radius of the fan may be measured between the engine centreline and the tip of a fan blade at its leading edge. The fan diameter (which may simply be twice the radius of the fan) may be greater than 250 cm, for example greater than 260 cm, 270 cm, 280 cm, 290 cm, 300 cm, 310 cm, 320 cm, 330 cm, 340 cm or 350cm.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than 10, for example greater than 11, for example greater than 11.5, for example greater than 12, for example greater than 13, for example greater than 14, for example greater than 15. The bypass duct may be substantially annular. The bypass duct may be radially outside the core engine. The radially outer surface of the bypass duct may be defined by a nacelle and/or a fan case.

A gas turbine engine as described and/or claimed herein may have any desired maximum thrust. Purely by way of non-limitative example, a gas turbine as described and/or claimed herein may be capable of producing at least 170kN of thrust, for example at least 180kN, for example at least 190kN, for example at least 200kN, for example at least 250kN, for example at least 300kN, for example at least 350kN, for example at least 400kN. The thrust referred to above may be at standard atmospheric conditions.

Such a gas turbine engine may be of any suitable form. For example, the gas turbine engine may be an aero gas turbine engine for use on aircraft. Such an engine may be a geared turbofan gas turbine engine, in which the fan stage is driven from a turbine via a gearbox, in order to reduce (or increase) the rotational speed of the fan stage compared with the driving turbine stage(s).

The arrangements of the present disclosure may be particularly effective in addressing any operability issues presented by the use of such lower speed fans, such as those driven via a gearbox.

The input to such a gearbox may be directly from a core shaft that connects a turbine to a compressor, or indirectly from the core shaft, for example via a spur shaft and/or gear. The core shaft may rigidly connect the turbine and the compressor, such that the turbine and compressor rotate at the same speed (with the fan rotating at a lower speed).

Any number of fan stages may be provided to an engine. For example, a gas turbine engine may have a single fan stage, such that the next downstream rotor stage after the fan is a compressor rotor stage, for example a compressor rotor stage in the core of the engine.

The skilled person will appreciate that except where mutually exclusive, a feature described in relation to any one of the above aspects may be applied to any other aspect. Furthermore, except where mutually exclusive, any feature described herein may be applied to any aspect and/or combined with any other feature described herein.

Embodiments will now be described by way of example only, with reference to the Figures, in which:

Figure 1 is a sectional side view of a gas turbine engine on accordance with the present disclosure;

Figure 2 is a radial view of a fan blade according to an example of the present disclosure;

Figure 3 is a side view of a fan blade according to an example of the present disclosure;

Figure 4 is another side view of a fan blade according to an example of the present disclosure;

Figure 5 is a close-up view of a leading edge portion of a fan blade according to an example of the present disclosure; and

Figure 6 is a side view of a fan blade according to an example of the present disclosure.

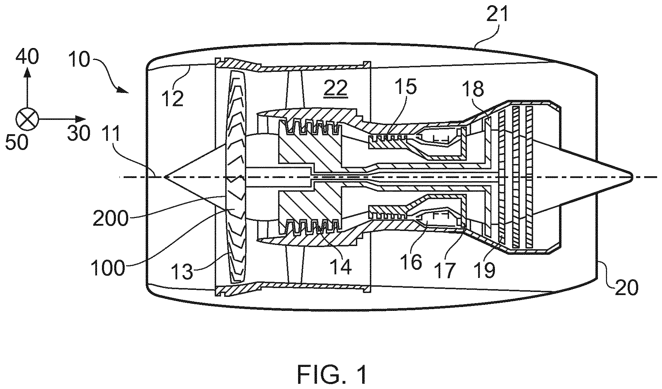

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

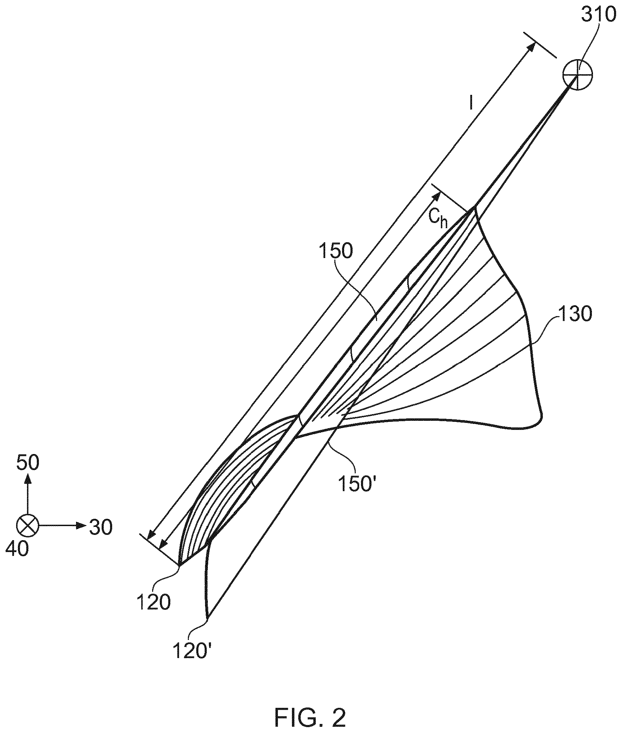

The gas turbine engine 10 and/or the fan stage 13 and/or the fan blades 100 of the fan stage 13 shown in Figure 1 may be in accordance with examples of the present disclosure, aspects of which are described by way of example only in relation to Figures 2 to 6.

Any gas turbine engine in accordance with the present disclosure (such as the gas turbine engine 10 of Figure 1) may, for example, have a specific thrust in the ranges described herein (for example less than 10) and/or a fan blade hub to tip ratio in the ranges described herein and/or a fan tip loading in the ranges described herein.

The present disclosure may relate to any suitable gas turbine engine. For example, other gas turbine engines to which the present disclosure may be applied may have related or alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan. The gas turbine engine shown in Figure 1 has a mixed flow nozzle 20, meaning that the flow through the bypass duct 22 and the flow through the core 15, 16, 17, 18, 19 are mixed, or combined, before (or upstream of) the nozzle 20). However, this is not limiting, and any aspect of the present disclosure may also, for example, relate to engines 10 having a split flow nozzle, which may mean that the flow through the bypass duct 22 has its own nozzle that is separate to and may be radially outside a core engine nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example.

The geometry of the gas turbine engine 10, and components thereof, is defined by a conventional axis system, comprising an axial direction 30 (which is aligned with the rotational axis 11), a radial direction 40, and a circumferential direction 50 (shown perpendicular to the page in the Figure 1 view). The axial, radial and circumferential directions 30, 40, 50 are mutually perpendicular.

The fan stage 13 comprises a plurality of fan blades 100 extending from a hub 200. The fan blades 100 may be defined with respect to the axial direction 30, radial direction 40, and circumferential direction 50 shown in Figure 1 in relation to the gas turbine engine 10.

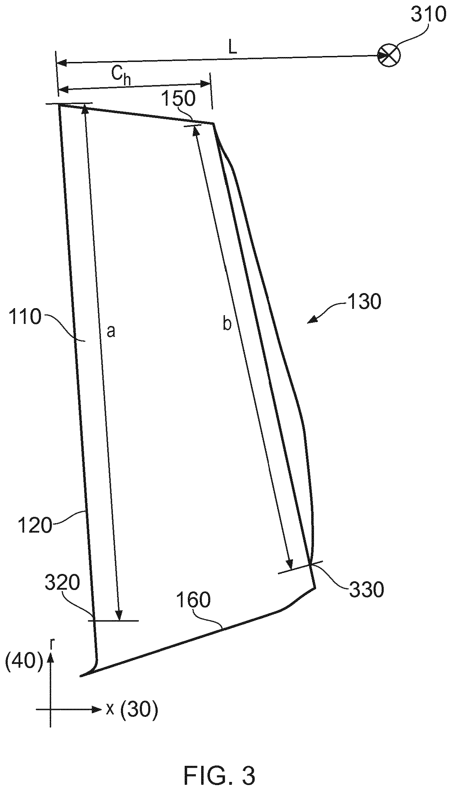

Figure 2 is a view in a radially inward direction of a fan blade 100. Figure 3 is a side view (that is, a view in the axial-radial plane) of the fan blade 100. The fan blade 100 has an aerofoil portion 110. The aerofoil portion 110 has a leading edge 120 and a trailing edge 130. The aerofoil portion 110 extends from a root 140 to a tip 150 in a substantially radial spanwise direction. The leading edge 110 may be defined as the line defined by the axially forwardmost points of the aerofoil portion 110 from its root 140 to its tip 150.

As mentioned above, the susceptibility of a fan blade 100 to flutter is at least part dependent on the torsional content of the lowest natural frequency mode shape (also referred to as the 1F mode shape)

This torsional content can be defined at the tip 150 of the blade 100 by a parameter I/Ch, where I is the distance (for example the shortest distance) from the leading edge 120 at the tip 150 to the centre of twist 310 in the mode shape, and Ch is the chord length at the tip 150 (see Figure 2). Therefore a relatively higher value of I/Ch represents a relatively lower torsional content in the mode shape. The parameter I/Ch may be thought of as describing the relative motion (for example in a substantially circumferential direction) between leading edge 120 and trailing edge 130 at the tip 150 (the motion of the leading edge 120 at the tip 150 usually being greater than the motion of the trailing edge 130 at the tip 150). In Figure 2, the reference label 120' indicates the leading edge 120 in the deformed (or displaced) 1F mode shape, and the reference label 150' indicates the tip 150 in that deformed (or displaced) 1F mode shape.

Figure 3 shows the nodal point 320 on the leading edge 120 and the nodal point 330 on the trailing edge 130 in the 1F mode shape, the nodal points 320, 330 being points on the blade 100 (for example towards the root 140) which are stationary in the 1F mode shape. To a first approximation the displacement of the tip 150 at the leading edge 120 depends on (or at least is affected by) the distance 'a' between the leading edge120 at the tip 150 and the 1F nodal point 320 on the leading edge 120. Similarly, to a first approximation the displacement of the tip 150 at the trailing edge 130 depends on (or at least is affected by) the distance 'b' between the trailing edge 130 at the tip 150 and the 1F nodal point 330 on the trailing edge 130.

Typically, the distance 'a' is greater than the distance 'b'. This may be at least in part because typically the 1F nodal point 320 on the leading edge 120 is radially inside the 1F nodal point 330 on the trailing edge 130.

The blade 100 shown in the Figures by way of example of the present disclosure may be said to be leant axially forwards, for example by at least having the line 'a' pointing axially forwards, i.e. to the left in Figure 3. As shown in the Figure 3 example, the line 'b' may also point axially forwards, for example at a greater angle than the line 'a'.

As explained elsewhere herein, the blade geometry described and/or claimed herein may reduce the susceptibility of the blades to flutter. For example, and without being limited or bound to a particular theory, the ratio between lengths 'a' and 'b' may be decreased compared with conventional blades, which may result in a decrease in the ratio between the tip displacement at the leading edge 120 and the tip displacement at the trailing edge 130 in the 1F mode. The fan blades 100 (and/or aerofoil portions 110) may have increased l/Ch compared with conventional fan blades, which may help to reduce the torsional content of the 1F mode shape, and thus reduce the susceptibility to flutter.

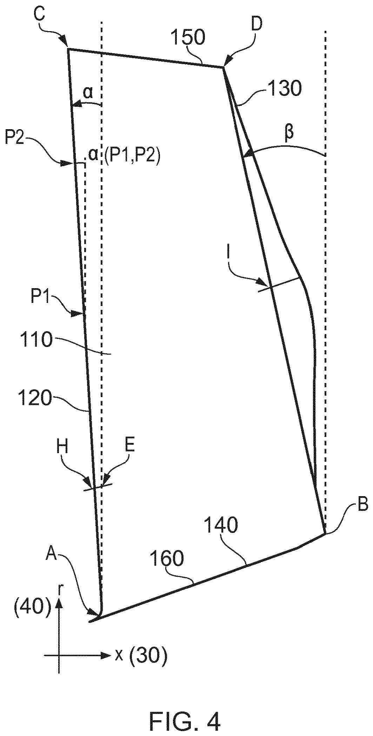

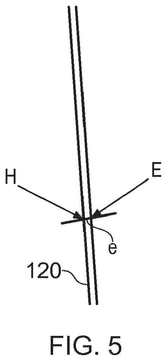

Various features of an exemplary fan blade 100 will now be described with reference to Figures 4 and 5. It will be appreciated that these features may be applied alone or in combination, as defined in the claims. The variables shown in Figures 4 and 5 are explained in the table below, where the term "LE" refers to the leading edge 120, and the term "TE" refers to the trailing edge 130:

| Point | Name | Definition |
|-------|------|-----------|
| A | LE root | Leading edge 120 at the root 140 of the aerofoil 110 |
| B | TE root | Trailing edge 130 at the root 140 of the aerofoil 110 |
| C | LE tip | Leading edge 120 at the tip 150 of the aerofoil 110 |
| D | TE tip | Trailing edge 130 at the tip 150 of the aerofoil 110 |
| P1, P2 | LE points | Points on leading edge 120 with radii that are at least 5% of the aerofoil span apart $$\frac{\|r_{P1}-r_{P2}\|}{r_C-r_A} \geq 0.05 \; ; \quad r_{P2} \geq r_{P1}$$ |
| E | Point on LE | Point on leading edge 120 with maximum perpendicular distance to the line AC |
| H | Point on AC | |
| e | Distance EH | $$e = \sqrt{(x_H - x_E)^2 + (r_H - r_E)^2}$$ |
| Alpha $\alpha$ | LE global slope | $$\alpha = \frac{180}{\pi} atan\left(\frac{x_c - x_A}{r_c - r_A}\right)$$ |
| alpha (P1,P2) | LE local slope | $$\alpha(P1,P2) = \frac{180}{\pi} atan\left(\frac{x_{P2} - x_{P1}}{r_{P2} - r_{P1}}\right)$$ |
| e% | LE "straightness" | $$e\% = \frac{e}{r_C - r_A} 100$$ |
| Span | Aerofoil Span | Difference in the radius of the leading edge 120 at the root 140 and at the tip 150: $r_C - r_A$ |

Note in the above table, that "x" refers to a position in the axial direction 30 and "r" refers to a position in the radial direction 40.

The global slope $\alpha$ of the aerofoil portion 110 of fan blades 100 as described and/or claimed herein, such as that shown by way of example in Figure 4, may be in the range of from -6° and -0.2°, for example within any of the ranges defined elsewhere herein. In this regard, the global slope $\propto$ may represent the angle formed between the radial direction and a straight line AC drawn between the leading edge point A at the root 140 and the leading edge point C at the tip 150.

The local slope $\propto$ ($P$1, $P$2) of the aerofoil portion 110 of fan blades 100 as described and/or claimed herein, such as that shown by way of example in Figure 4, may be in the range of from -6° and 0°, for example within any of the ranges defined elsewhere herein. In this regard, the local slope $\propto$ ($P$1, $P$2) may represent the angle formed between the radial direction and a line drawn between any two points on the leading edge that have a difference in radius of at least 5% of the blade span.

The relationship between 'E' and 'H' as defined in the table above is seen most easily in Figure 5. The distance 'e' between the points 'E' and 'H' may be said to represent the maximum perpendicular distance between any point on the leading edge and a straight line drawn between the leading edge at the root. As a percentage ('e%')the distance 'e' of the aerofoil portion 110 of fan blades 100 as described and/or claimed herein is less than 5%, for example less than 2% (or any other range as described and/or claimed herein) of the span of the aerofoil portion 110.

The trailing edge 130 of the aerofoil portion 110 may also define a global slope $\beta$. The global slope $\beta$ of the trailing edge 130 of fan blades 100 may be in the range of from -40°and 0°, for example -30°and -1°, for example -25°and -2.5°, for example -20°and -5°, for example -15°and -7.5°, for example around -10°. In this regard, the global slope $\beta$ of the trailing edge 130 may represent the angle between the radial direction and a straight line I drawn between a point B on the trailing edge 130 at the root 140 and a point D on the trailing edge 130 at the tip 150.

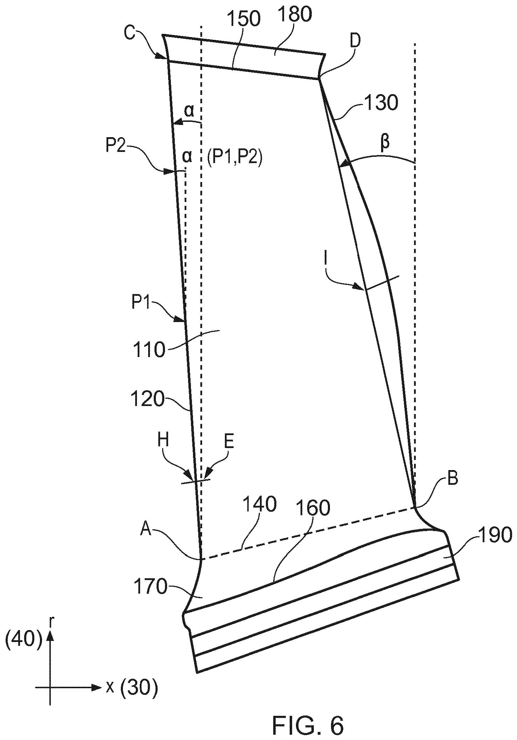

The fan blade 100 comprises a platform 160. The aerofoil portion 110 may extend directly from the platform 160, as in the Figure 4 example. Alternatively, as shown by way of example in Figure 6, a fan blade 100 may have a root portion 170. The root portion 170 may be said to extend between the platform 160 and the root 140 of the aerofoil portion 110. The radial extent of the root portion 170 may be no more than 7%, for example no more than 5%, of the span of the aerofoil portion 110.

Also as shown by way of example in Figure 6, the fan blade 100 may comprise a tip portion 180. The tip portion 180 may be said to extend from the tip 150 of the aerofoil portion 110. The radial extent of the tip portion 180 may be no more than 5% of the span of the aerofoil portion 110.

The fan blade 100 may be attached to the hub 200 in any desired manner. For example, the fan blade 100 may comprise a fixture 190 such as that shown by way of example in Figure 6 which may engage a corresponding slot in the hub (or disc). Purely by way of example, such a fixture may be in the form of a dovetail that may slot into and/or engage a corresponding slot in the hub/disc in order to fix the fan blade to the hub/disc.

Alternatively, the fan blade 100 and the hub 200 may be formed as a unitary part, with no mechanical and/or releasable connections, so as to form a unitary fan stage 13. Such a unitary fan stage 13 may be referred to as a "blisk". Such a unitary fan stage 13 may be manufactured in any suitable manner, for example by machining and/or by linear friction welding the fan blades 100 to the hub 200, or at least linear friction welding the aerofoil portions 110 to a hub 200 that includes radially inner stub portions of the fan blades 100.

The hub to tip ratio, which may have a value as indicated elsewhere herein, may be defined as the radius of the leading edge 120 at the root 140 (which may itself be referred to as a hub) of the aerofoil 110 (point A) divided by the radius of the leading edge 120 at the tip 150 of the aerofoil 110 (point B), i.e. $r_A/r_B$.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A fan stage (13) for a gas turbine engine defining axial (30), radial (40) and circumferential (50) directions comprising:

   a hub (200); and
   a plurality of fan blades (100) extending radially form the hub, wherein each fan blade comprises:
   an aerofoil portion (110) having a leading edge (120) extending from a root (140) to a tip (150), the radial distance between the leading edge at the root and the leading edge at the tip defining a blade span **characterized in that**, when viewed along a circumferential direction:

   the angle ($\alpha$) formed between the radial direction and a straight line (AC) drawn between the leading edge at the root and at the tip is in the range of from -6°and - 0.2°; and
   the angle ($\alpha$ (P1, P2)) formed between the radial direction and a line drawn between any two points (P1, P2) on the leading edge that have a difference in radius of at least 5% of the blade span is in the range of from -6°and 0°,
where a negative angle indicates that the respective line has an axial component that is in the same direction as the axial component of the direction from a trailing edge to the leading edge of the blade; and wherein: when viewed along a circumferential direction, the maximum perpendicular distance (e) between any point on the leading edge and a straight line drawn between the leading edge at the root and at the tip is 5% of the blade span.

2. A fan stage for a gas turbine engine according to claim 1, wherein the maximum perpendicular distance (e) between any point on the leading edge and a straight line drawn between the leading edge at the root and at the tip is 2% of the blade span.

3. A fan stage for a gas turbine engine according to claim 1 or claim 2, wherein each fan blade comprises:

   a platform (160); and
   a root portion (170), wherein
   the root portion extends between the platform and the root of the aerofoil portion.

4. A fan stage for a gas turbine engine according to claim 3, wherein the radial extent of the root portion is no more than 7% of the span of the aerofoil portion.

5. A fan stage for a gas turbine engine according to any one of the preceding claims, wherein each fan blade comprises a tip portion (180) that extends at least radially away from the tip of the aerofoil portion.

6. A fan stage for a gas turbine engine according to claim 5, wherein the radial extent of the tip portion is no more than 7% of the span of the aerofoil portion.

7. A fan stage for a gas turbine engine according to any one of the preceding claims, wherein:
   for two points on the leading edge that are radially closer to the tip than to the root and have a difference in radius of at least 5% of the blade span, the axial position of the radially outer point is forward of the axial position of the radially inner point.

8. A fan stage for a gas turbine engine according to claim 7, wherein:
   for two points on the leading edge that are radially closer to the tip than to the root and have a difference in radius of at least 2% of the blade span, the axial position of the radially outer point is forward of the axial position of the radially inner point.

9. A fan stage for a gas turbine engine according to any one of the preceding claims, wherein the aerofoil portion has a trailing edge (130) extending from the root the tip, wherein, when viewed along a circumferential direction the angle ($\beta$) formed between the radial direction and a straight line (BD) drawn between the trailing edge at the root and at the tip is in the range of from -20°and -5°, where a negative angle indicates that the respective line has an axial component that is in the same direction as the axial component of the direction from a trailing edge to the leading edge of the blade.

10. A fan stage for a gas turbine engine according to claim 1, wherein:
    the ratio of the radius of the position where the leading edge of one of the fan blades meets the hub to the outermost radial extent of the leading edge of the fan blade is less than 0.33.

11. A gas turbine engine (10) comprising a fan stage of any one of claims 1 to 10.

12. A gas turbine engine comprising:

    a fan stage according to any one of claims 1 to 10;
    a turbine; and
    a gearbox, wherein:
    the fan is driven from the turbine via the gearbox, in order to reduce the rotational speed of the fan stage compared with the driving turbine stage.

13. A gas turbine engine according to claim 11 or claim 12 with a specific thrust of less than 100 N/Kg/s.

14. A method of manufacturing a fan stage (13) for a gas turbine engine (10) according to any of claims 1 to 9 comprising:

> providing the fan hub (200); and
> attaching the plurality of fan blades (100) to the fan hub using linear friction welding to produce said fan stage.

**Patentansprüche**

1. Fanstufe (13) für einen Gasturbinenmotor, die axiale (30), radiale (40) und umfängliche (50) Richtungen definiert, umfassend:

> eine Nabe (200); und
> eine Mehrzahl von Fanschaufeln (100), die sich radial von der Nabe erstrecken, wobei jede Fanschaufel folgendes umfasst:
> einen Profilteil (110) mit einer Vorderkante (120), die sich von einer Wurzel (140) zu einer Spitze (150) erstreckt, wobei der radiale Abstand zwischen der Vorderkante an der Wurzel und der Hinterkante an der Spitze eine Schaufelspannweite definiert, **dadurch gekennzeichnet, dass** bei einer Ansicht entlang der umfänglichen Richtung:
>
>> der Winkel ($\alpha$), der gebildet ist zwischen der radialen Richtung und einer geraden Linie (AC), die zwischen der Vorderkante an der Wurzel und an der Spitze gezeichnet ist, im Bereich von -6° bis -0,2° liegt;
>> der Winkel ($\alpha$ (P1, P2), der gebildet ist zwischen der radialen Richtung und einer zwischen zwei beliebigen Punkten (P1, P2) an der Vorderkante gezeichneten Linie, die eine Radiusdifferenz von mindestens 5% der Schaufelspannweite aufweisen, im Bereich von -6° bis 0° liegt;
>> wobei ein negativer Winkel anzeigt, dass die entsprechende Linie eine axiale Komponente aufweist, die in die gleiche Richtung angeordnet ist wie die axiale Komponente der Richtung von einer Hinterkante zu der Vorderkante der Schaufel; und wobei:
>> bei einer Ansicht entlang der umfänglichen Richtung der maximale senkrechte Abstand (e) zwischen jedem Punkt auf der Vorderkante und einer zwischen der Vorderkante an der Wurzel und an der Spitze gezeichneten geraden Linie 5% der Schaufelspannweite beträgt.

2. Fanstufe für einen Gasturbinenmotor nach Anspruch 1, wobei der maximale senkrechte Abstand (e) zwischen jedem Punkt auf der Vorderkante und einer zwischen der Vorderkante an der Wurzel und an der Spitze gezeichneten geraden Linie 2% der Schaufelspannweite beträgt.

3. Fanstufe für einen Gasturbinenmotor nach Anspruch 1 oder Anspruch 2, wobei jede Fanschaufel folgendes umfasst:

> eine Plattform (160); und
> einen Wurzelteil (170), wobei
> sich der Wurzelteil zwischen der Plattform und der Wurzel des Profilteils erstreckt.

4. Fanstufe für einen Gasturbinenmotor nach Anspruch 3, wobei sich der Wurzelteil radial um nicht mehr als 7% der Spannweite des Flügelteils erstreckt.

5. Fanstufe für einen Gasturbinenmotor nach einem der vorstehenden Ansprüche, wobei jede Fanschaufel einen Spitzenteil (180) umfasst, der sich wenigstens radial von der Spitze des Profilteils weg erstreckt.

6. Fanstufe für einen Gasturbinenmotor nach Anspruch 5, wobei sich der Spitzenteil radial um nicht mehr als 7% der Spannweite des Profilteils erstreckt.

7. Fanstufe für einen Gasturbinenmotor nach einem der vorstehenden Ansprüche, wobei:
für zwei Punkte auf der Vorderkante, die radial näher an der Spitze als an der Wurzel liegen, und die eine Radiusdifferenz von mindestens 5% der Schaufelspannweite aufweisen, die axiale Position des radial äußeren Punktes vor der axialen Position des radial inneren Punktes liegt.

8. Fanstufe für einen Gasturbinenmotor nach Anspruch 7, wobei:
für zwei Punkte auf der Vorderkante, die radial näher an der Spitze als an der Wurzel liegen, und die eine Radiusdifferenz von mindestens 2% der Schaufelspannweite aufweisen, die axiale Position des radial äußeren Punktes vor der axialen Position des radial inneren Punktes liegt.

9. Fanstufe für einen Gasturbinenmotor nach einem der vorstehenden Ansprüche, wobei der Profilteil eine Hinterkante (130) aufweist, die sich von der Wurzel zu der Spitze erstreckt, wobei bei einer Ansicht entlang der umfänglichen Richtung der Winkel ($\beta$), der gebildet ist zwischen der radialen Richtung und einer geraden Linie (BD), die zwischen der Hinterkante an der Wurzel und an der Spitze gezeichnet ist, im Bereich von -20° bis -5° liegt, wobei ein negativer Winkel anzeigt, dass die entsprechende Linie eine axiale Komponente aufweist, die in die gleiche Richtung angeordnet ist wie die axiale Komponente der Richtung von einer Hinterkante zu der Vorderkante der Schaufel.

10. Fanstufe für einen Gasturbinenmotor nach Anspruch 1, wobei:
das Verhältnis des Radius der Position, an welcher die Vorderkante einer der Fanschaufeln auf die Nabe trifft, zu der äußersten radialen Erstreckung der Vorderkante der Fanschaufel kleiner ist als 0,33.

11. Gasturbinenmotor (10), der eine Fanstufe nach einem der Ansprüche 1 bis 10 umfasst.

12. Gasturbinenmotor, umfassend:

eine Fanstufe nach einem der Ansprüche 1 bis 10;
eine Turbine; und
ein Getriebe, wobei:
der Fan durch die Turbine über das Getriebe angetrieben wird, um die Drehzahl der Fanstufe im Vergleich zu der Antriebsturbinenstufe zu verringern.

13. Gasturbinenmotor nach Anspruch 11 oder Anspruch 12 mit einem spezifischen Schub von weniger als 100 N/Kg/s.

14. Verfahren zur Herstellung einer Fanstufe (13) für einen Gasturbinenmotor (10) nach einem der Ansprüche 1 bis 9, umfassend:

Bereitstellen der Fannabe (200); und
Anbringen der Mehrzahl von Fanschaufeln (100) an der Fannabe unter Verwendung von linearem Reibschweißen zur Erzeugung der Fanstufe.

**Revendications**

1. Étage de ventilateur (13) pour un moteur à turbine à gaz définissant des directions axiale (30), radiale (40) et circonférentielle (50) comprenant :

un moyeu (200) ; et
une pluralité d'aubes de ventilateur (100) s'étendant radialement à partir du moyeu, chaque aube de ventilateur comprenant :
une partie de profil aérodynamique (110) ayant un bord d'attaque (120) s'étendant d'un pied (140) à une extrémité (150), la distance radiale entre le bord d'attaque au niveau du pied et le bord d'attaque au niveau du bout définissant une envergure d'aube **caractérisée en ce que**, lorsqu'elle est vue le long d'une direction circonférentielle :

l'angle ($\alpha$) formé entre la direction radiale et une ligne droite (AC) tracée entre le bord d'attaque au niveau du pied et au niveau du bout est compris entre -6° et -0,2° ; et
l'angle ($\alpha$ (P1, P2)) formé entre la direction radiale et une ligne tracée entre deux points (P1, P2) quelconques du bord d'attaque qui ont une différence de rayon d'au moins 5 % de l'envergure d'aube est compris entre -6° et 0°,
un angle négatif indiquant que la ligne respective a une composante axiale qui est dans la même direction que la composante axiale de la direction allant d'un bord de fuite au bord d'attaque de l'aube ; et
lorsqu'elle est vue dans une direction circonférentielle, la distance perpendiculaire maximale (e) entre un point quelconque du bord d'attaque et une ligne droite tracée entre le bord d'attaque au niveau du pied et au niveau de l'extrémité étant de 5 % de l'envergure d'aube.

2. Étage de ventilateur pour un moteur à turbine à gaz selon la revendication 1, la distance perpendiculaire maximale (e) entre un point quelconque du bord d'attaque et une ligne droite tracée entre le bord d'attaque au niveau du pied et au niveau du bout étant de 2 % de l'envergure d'aube.

3. Étage de ventilateur pour un moteur à turbine à gaz selon la revendication 1 ou 2, chaque aube de ventilateur comprenant :

une plate-forme (160) ; et
une partie de pied (170),
la partie de pied s'étendant entre la plate-forme et le pied de la partie de profil aérodynamique.

4. Étage de ventilateur pour un moteur à turbine à gaz selon la revendication 3, l'étendue radiale de la partie de pied n'étant pas supérieure à 7 % de l'envergure de la partie de profil aérodynamique.

5. Étage de ventilateur pour un moteur à turbine à gaz selon l'une quelconque des revendications précédentes, chaque aube de ventilateur comprenant une partie de bout (180) qui s'étend au moins radialement à l'opposé du bout de la partie de profil aérodynamique.

6. Étage de ventilateur pour un moteur à turbine à gaz selon la revendication 5, l'étendue radiale de la partie de bout n'étant pas supérieure à 7 % de l'envergure de la partie de profil aérodynamique.

7. Étage de ventilateur pour un moteur à turbine à gaz selon l'une quelconque des revendications précédentes, pour deux points du bord d'attaque qui sont radialement plus proches du bout que du pied et ont une différence de rayon d'au moins 5 % de l'envergure d'aube, la position axiale du point radialement extérieur étant en avant de la position axiale du point radialement intérieur.

8. Étage de ventilateur pour un moteur de turbine à gaz selon la revendication 7, pour deux points du bord d'attaque qui sont radialement plus proches du bout que du pied et ont une différence de rayon d'au moins 2 % de l'envergure d'aube, la position axiale du point radialement extérieur étant en avant de la position axiale du point radialement intérieur.

9. Étage de ventilateur pour un moteur à turbine à gaz selon l'une quelconque des revendications précédentes, la partie de profil aérodynamique ayant un bord de fuite (130) s'étendant depuis le pied jusqu'au bout, lorsqu'il est vu le long d'une direction circonférentielle, l'angle ($\beta$) formé entre la direction radiale et une ligne droite (BD) tracée entre le bord de fuite au niveau du pied et au niveau du bout étant dans la plage comprise entre -20° et -5°, un angle négatif indiquant que la ligne respective a une composante axiale qui est dans la même direction que la composante axiale de la direction allant d'un bord de fuite au bord d'attaque de l'aube.

10. Étage de ventilateur pour un moteur de turbine à gaz selon la revendication 1, le rapport entre le rayon de la position où le bord d'attaque de l'une des aubes de ventilateur rencontre le moyeu et l'étendue radiale la plus extérieure du bord d'attaque de l'aube de ventilateur étant inférieur à 0,33.

11. Moteur à turbine à gaz (10) comprenant un étage de ventilateur selon l'une quelconque des revendications 1 à 10.

12. Moteur à turbine à gaz comprenant :

un étage de ventilateur selon l'une quelconque des revendications 1 à 10 ;
une turbine ; et
une boîte de vitesses,
le ventilateur étant entraîné par la turbine par l'intermédiaire de la boîte de vitesses, afin de réduire la vitesse de rotation de l'étage de ventilateur par rapport à celle de l'étage de turbine motrice.

13. Moteur à turbine à gaz selon la revendication 11 ou 12 avec une poussée spécifique inférieure à 100 N/Kg/s.

14. Procédé de fabrication d'un étage de ventilateur (13) pour un moteur de turbine à gaz (10) selon l'une quelconque des revendications 1 à 9 comprenant les étapes consistant à :

fournir le moyeu de ventilateur (200) ; et
fixer la pluralité d'aubes de ventilateur (100) au moyeu de ventilateur à l'aide d'une soudure par friction linéaire pour produire ledit étage de ventilateur.

FIG. 1

FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5167489 A